(19)

Europäisches Patentamt

European Patent Office

Office européen des brevets

(11) EP 2 166 494 A1

(12) **EUROPEAN PATENT APPLICATION**

(43) Date of publication:
24.03.2010 Bulletin 2010/12

(51) Int Cl.:
*G06Q 10/00* (2006.01)   *G06Q 40/00* (2006.01)

(21) Application number: 08305532.7

(22) Date of filing: 05.09.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(71) Applicant: QUOD Financial
92800 Puteaux (FR)

(72) Inventors:
• Pichvai, Ali
Londres W2 3AF (GB)
• Rouillere, Mickaël
92150 Suresnes (FR)

(74) Representative: Pontet, Bernard
Pontet Allano & Associés s.e.l.a.r.l.
25, Rue Jean Rostand
Parc Club Orsay Université
91893 Orsay Cedex (FR)

(54) **Trading method and system**

(57)     Method for assisting an operator in an acquisition decision process, said decision process being related to the acquisition of a predetermined total amount (K) of entities among a plurality of P pools of entities, each pool being associated with a cost function (f1,f2,...,fp) supplying a cost value depending on the quantity (x) of acquired entities within said pool. This method comprises:
- calculating an order book including costs, so as to obtain a list of couples (price, quantity) for each pool,
- building, within a dynamic programming algorithm, a graph comprising a (0,0) top and P.(K+1) tops each corresponding to a couple (p,k) for a pool (p) among said plurality of P pools and a quantity (k) less than said total amount K,
- determining a shortest path between said top (0,0) and top (P,K),

deriving from said shortest path, for each pool (p) of entities, the corresponding optimal quantity ($k_{opt}$) to be acquired, and
providing said operator with said optimal quantities (k) respectively corresponding to each pool among said plurality (P) of pools.
    Use in trading markets, within Advanced Execution Platforms.

FIG. 1

EP 2 166 494 A1

## Description

The present invention relates to a method for assisting an operator in an acquisition decision process. It also relates to a system implementing said method, and to an advanced execution platform deploying said method.

## Background

The change of paradigm from connectivity-driven execution towards advanced execution is a strategic and future-determining decision for market participants. The shift is driven by major market forces which include investors' demand to have multi-asset and cross-asset execution to mirror their cross-asset investment strategy, the fragmentation of liquidity, and globalization of capital markets. In order to respond to these new challenges, an efficient, flexible, rapid-to-implement and high performance/low latency multi-layer platform has been implemented: the Advanced Execution Platform (AEP). In such platforms, various types of execution algorithms are available:

- Slicing and scheduling (VWAP, waving) based on historical data
- Dynamic and adaptive execution algorithms

Complex Event Processing tools are provided and marketed by companies like Apama, StreamBase, Aleri and Correlate. In trading companies, such CEP tools are now frequently employed by traders and are quoted as Trading-Specific CEP tools.

The document WO0229608A2 discloses an apparatus and method for optimizing total costs over the stages of a network of interconnected stages. The method of the present invention includes receiving at least one data set for each of a plurality of interconnected stages, each data set corresponding to an option at the corresponding stage, each data set including a first cost and a second cost.

The document US20080010181A1 discloses a system and method are disclosed for capturing the full dynamic and multi-dimensional nature of the asset allocation problem through applications of stochastic dynamic programming and stochastic programming techniques.

These Trading-Specific CEP tools are generally operated on Advanced Execution Platforms (AEP). In this domain, decisions have to be taken very quickly to be relevant and thus require very short processing times, typically 1 or 2 ms.

Traders are usually seeking optimal choices in acquiring liquidities, either on the basis of a gross price or a net price equal to said gross price plus costs. When cost functions are linear, the optimization problem is easy to solve.

But when the cost functions are complex or non linear, the present tools don't make it possible to easily and quickly optimize the selection.

Best execution requirements imply to take into account such non liner cost functions during the decision-making process within the Advanced Execution Platform used by traders.

An objective of the present invention is thus to propose a new method for assisting an operator in an acquisition decision process, for example, within an Advanced Execution Platform (AEP), that would meet best execution requirements and have a latency substantially less that usually observed latencies.

More generally, the above-cited problem met with complex cost functions in trading technologies can also be extended in other technical domains where optimization approaches are required with consideration of cost functions.

The present invention is purposed to reach these general objectives through providing an assistance in a decision-making process related to the acquisition of entities and wherein cost functions have to be considered.

## Objects and advantages of the invention

This is obtained with a method for assisting an operator in an acquisition decision process, said decision process being related to the acquisition of a predetermined total amount (K) of entities among a plurality of P pools of entities, each pool being associated with a cost function (f1,f2,..,fp) supplying a cost value depending on the quantity (x) of acquired entities within said pool.

According to the invention, this method comprises:

- calculating an order book including costs, so as to obtain a list of couples (price, quantity) for each pool,
- building, within a dynamic programming algorithm, a graph comprising a (0,0) top and P.(K+1) tops each corresponding to a couple (p,k) for a pool (p) among said plurality of P pools and a quantity (k) less than said total amount K,
- determining a shortest path between said top (0,0) and top (P,K),

deriving from said shortest path, for each pool (p) of entities, the corresponding optimal quantity ($k_{opt}$) to be acquired, and

providing said operator with said optimal quantities (k) respectively corresponding to each pool among said plurality (P) of pools.

The graph is advantageously built with vertices corresponding to quantities (q) to be acquired in each pool (p), and with edges corresponding to the costs induced by acquiring quantities (q) on said pool (p).

The cost functions are approximated by convex functions.

Either a best volume of entities for a predetermined limit price is searched, or a best price for a predetermined volume of entities is searched, or a combination of these two objectives.

In an advantageous embodiment of the invention, the method further comprises the step of supplying an information on a predictable number of executions to be achieved in the dynamic programming algorithm for a volume of entities to be acquired.

In a preferred embodiment of the invention, entities comprises liquidities available for acquisition in a trading market, and the method is implemented within an Advanced Execution Platform (AEP).

With the method according to the invention, it is now possible to provide operators, in particular traders, with new efficient and time-sparing tools for assisting them in the process of selecting "at best" liquidities among pools available on markets.

According to another aspect of the invention, it is proposed a system for assisting an operator in an acquisition decision process, said decision process being related to the acquisition of a predetermined total amount (K) of entities among a plurality of P pools of entities, each pool being associated with a cost function (f1,f2,..,fp) supplying a cost value depending on the quantity (x) of acquired entities within said pool, said system implementing the method according to any of preceding claims,

**characterized in that** it comprises:

- means for calculating an order book including costs, so as to obtain a list of couples (price, quantity) for each pool,
- means for building, within a dynamic programming algorithm, a graph comprising a (0,0) top and P.(K+1) tops each corresponding to a couple (p,k) for a pool (p) among said plurality of P pools and a quantity (k) less than said total amount K,
- means for determining a shortest path between said top (0,0) and top (P,K),
- means for deriving from said shortest path, for each pool (p) of entities, the corresponding optimal quantity ($k_{opt}$) to be acquired, and
- means for providing said operator with said optimal quantities (k) respectively corresponding to each pool among said plurality (P) of pools.

The method according to the invention can be integrated with existing infrastructure and systems, and be provided as an API. It can have an adaptive behaviour, by constantly listening to external events: market data, policies, and adjusting and modifying past decisions on-the-fly.

The method according to the invention is different than market-sweeping technique, for following reasons:

- the context is considered not only when issuing orders on market,
- the orders being executed are monitored, and a dynamic management of both aggressive and passive orders is achieved, and
- various parameters can be taken into account such as the cost of execution (fees), the latency, the market preference, the probability of execution, the liquidity seeking.

The liquidity available for partial quantity only can also be considered in the method according to the invention, with "at best" order issued and new liquidity appearing on a market.

Additional parameters adapting the behaviour of algorithm during scenarios can be considered, such as intelligent liquidity hunter, match blocks through dark liquidity pools, and accepting risk of overfilling order.

**Brief description of the drawings**

The accompanying drawings in combination with the description herewith, illustrate features and advantages of the invention:

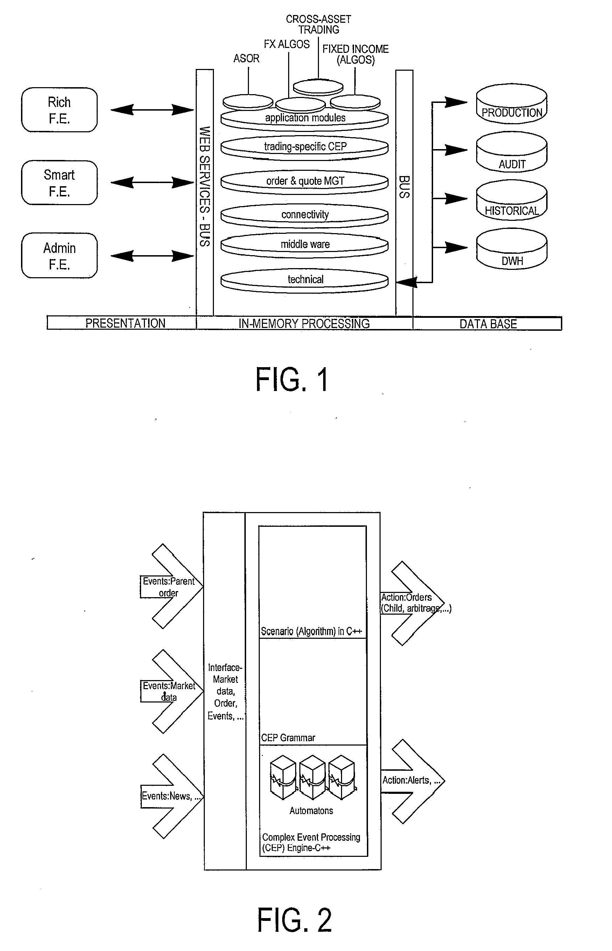

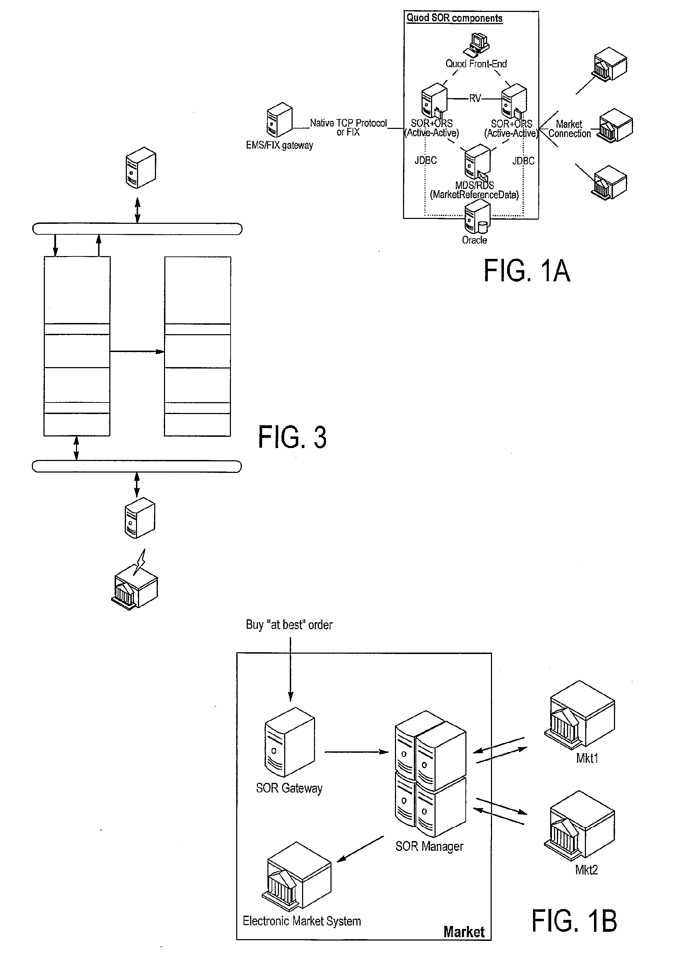

- Figure 1 features an AEP Logical Service-Driven Architecture used in the method according to the invention;
- Figure 1A illustrates a Smart Order Router implemented in the method according to the invention;
- Figure 1B illustrates a Market Order router implemented in the method according to the invention;
- Figure 1 illustrates an Algorithmic trading internal architecture;
- Figure 3 illustrates a SORS fault-tolerant architecture

- Figure 2 illustrates a Load-balanced Smart Order Routing Services
- Figure 3 illustrates a Load-balancing with 2 active server plus fault- tolerance

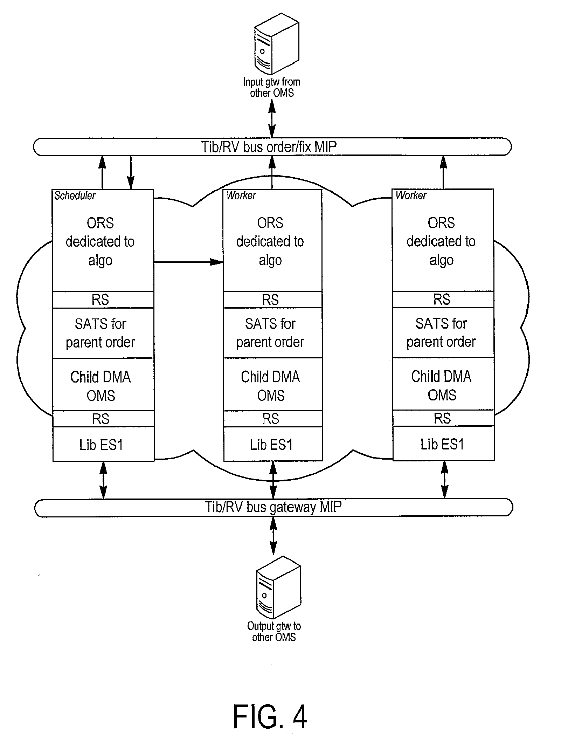

- Figure 4 illustrates Performance testing with latency measuring;

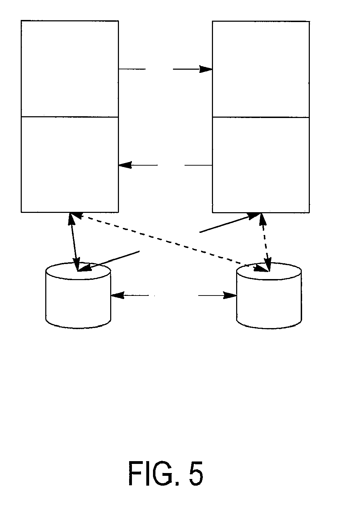

- Figure 5 illustrates the use of a single database server, with only one database; and

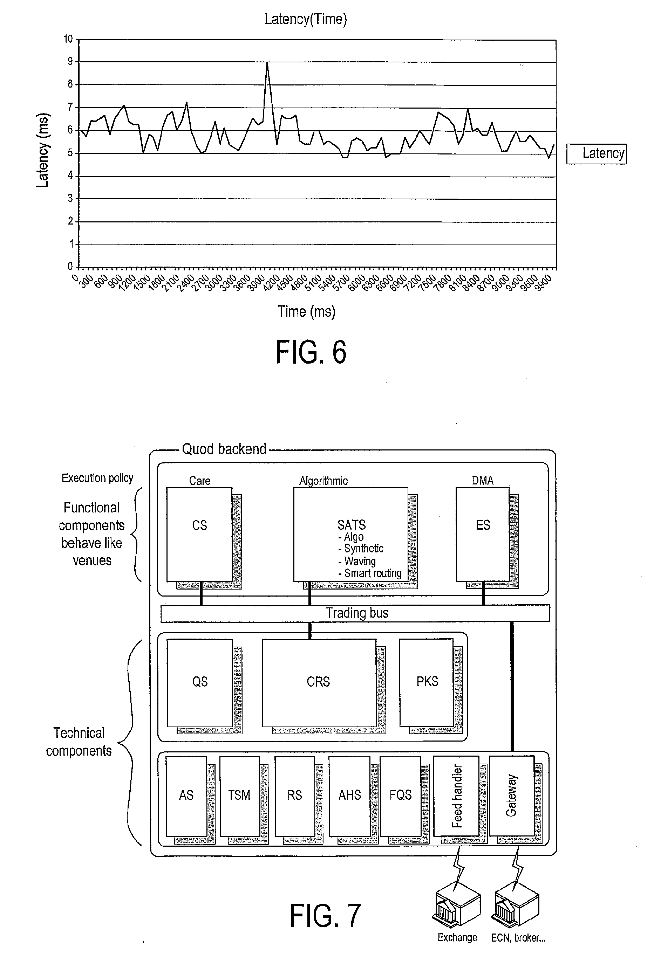

- Figure 6 illustrates the use of a single database server, with one database server per site.

**Detailed description of the invention**

An embodiment of the invention is now being described, in the context of liquidities trade, Trading-specific Complex-Event Processing (CEP), and within an Advanced Execution Platform (AEP), with reference to Figure 1. This platform is provided with a Smart Order router (sell side) (Figure 1A), and with a Market Order Router (Figure 1B).

First, some definitions of technical terms used in this domain are given hereafter.

A "parent order" means the original order that must perform the best execution, typically, the broker or the client's order.

A "child order" means a market order related to a parent "at best" order; child orders are monitored by the best execution algorithm.

An "aggressive order" means an order sent as immediate or cancel, and which intent is to capture available liquidity.

A "passive order" means an order sent to rest on a market and wait for an execution.

A "latency" is the time spent to reach a target (in this case, a venue); can either be round-trip or SOR to market.

A "dark pool" means a block matching platform that internalizes orders but does not publish market data; actual trades are published

Trading-specific Complex-Event Processing (CEP) is a Complex Event Processing engine that has been designed for the needs and functions required by trading specific applications.

The Trading-Specific CEP knows how to listen to market events such as market data updates, status and phase changes and all other relevant market events. It natively understands the order lifecycle of parent and child orders and manages roll-ups.

The technical components supporting the CEP are:

- Core services: SATS (Synthetic and Algorithmic Trading Service), which implement the event processing engine and exposes a C++ API that provides access to the most important trading and event objects;
- Non-core services: which include services such as the Historical and Statistics Database that provides the capability to use statistics and historical data in the algorithms' decision making mechanism.

In this embodiment of the invention, an operator has to deal with P pools of liquidities, each pool being provided with a cost function f1,f2,...fp depending on the acquired quantity x, x being an integer comprised between 0 and K.

The method according to the invention implements:

$$\text{minimizing } \sum f_p(x_p) \text{ with the constraint } \sum x_p = K$$

Typically, the total required amount can be comprised between hundreds and thousands of units, with the number of pools does note exceed 10.

The functions $f_p$ are assumed to be convex in $X_p$.

The graph used in the dynamic programming algorithm implemented in the present invention is built as follows. A first top (0,0), and then P.(K+1) tops are created, each corresponding to a couple (p,k) where p is integer comprised between 1 and P, and k is integer comprised between 0 and K.

There is an arch between each top (p-1,k) and (p,k') with a cost $f_p(k'-k)$, for any p comprised between 2 and P and any pair of values k and k' such that k'>k.

By the end, the required quantity K is to be obtained, by searching a shortest path between the tops (0,0) and (P,K). The mathematic complexity of this algorithm is in $O(P.K^2)$.

The method according to the invention, when implemented by a CPU Quad Xeon 3.0 Ghz, achieves 180 orders per CPU per second. The latency is then 5 ms.

Application Modules

The Application Modules complement the Trading Specific CEP with Business Applications that leverage the power of the AEP platform the architecture of which is represented in Figure 1. They are built through algorithms leveraging the C++ API from the Trading Specific CEP Layer.

Algorithms that illustrate the various capabilities of the platform comprise:

- Statistical-based algorithms that predict future execution outcomes from past trend,
- Probabilistic-based algorithms based on probability,
- Mathematical optimization methods which address large and complex decision-making cases.

The method according the invention is typically one of these mathematical optimization methods. Smart order routing and liquidity management meets Best Execution requirements. Multi-asset order and Quote Management manages the overall order / quote flow and lifecycle.

An AEP platform has been developed in a fully service-based distributed architecture which provides the following unified services for all the AEP and application modules:

- High availability/fault-tolerance: multi-layered fault-tolerance in Active-Active and Active-Passive mode.
- Load-balancing: load-balancing based on randomized or round-robin mechanism.
- Persistence: in-memory cache processing, with asynchronous persistence on RBDMS.
- Multi-location: This allows a truly global deployment for global trading whilst maintaining a centralized view of trading/ execution.
- Centralized administration services: this provides a unique way to administer the platform functionally and technically.

The Synthetic Algorithmic Trading Service (SATS) allows the automation of order submission on specific events. Events are configurable: basic events such as market data, order status are supported as well as other types of client-specific events. Algorithms are written through a simple grammar that allows the user to use arithmetic rules, Boolean rules, sequential rules, time rules, etc. writing an algorithm.

An example of internal architecture of algorithmic trading is given in Figure 2.

Actions resulting of the completion of an algorithm can be variable, but must at least allow the user to control the life cycle of an order (New, Cancel, Modify).

The ATS detects and initiate to various types of events, which are:

- Market data quotes: an action can result of the variation of any value of a quote message received from the market data (bid, ask, last traded price, ...)
- Market depth: an action can result of the variation of any value of a market depth message received from the market data.
- Trading events: an action can result of the reception of any Trading messages related to the order life cycle: order reply, trans creation and updates.

The library of events is by the client, in order to allow specific integrations.

The system must provide the user with a grammar allowing him to write algorithms. This grammar must allow the user to describe event detection with the following operators:

- Arithmetic operators: addition, subtraction, multiplication, division
- Boolean operators: AND, OR
- comparison operators: equal, non equal, lower than , lower or equal, greater than, greater or equal
- Sequential operators:

    - Exclusive sequence: the sequence of events must be detected at once, i.e. the events are detected sequentially, without any interruption between them.
    - Timed exclusive sequence: exclusive sequence b a certain amount of time.
    - Absolute sequence: the sequence of events is detected, whatever occurs between them.

- Time operators: two operators must be defined: one to run an action at a specific time (AT), another one to launch an event detection within a certain period (IN).

On event patterns detection, the ATS initiates the following actions :

- Create a new order,
- Modify an existing order,

- Cancel an existing order,
- Run another instance of an algorithm,
- Send notification to front-ends...

When creating a new order, the ATS must be able to run further actions on this order under specific detection of events (automaton control).

For actions execution, an API C++ is provided which provides the ability to access the different automated objects such as the Ext_exec() function.

Different methods are used to create Child order.

- Synchronous Client trading system1 response to a new child order creation
- Asynchronous exchange response to a new order creation
- Child order executions.

Automatic allocation can be performed using different algorithms, including:

- Exact Average allocation algorithm will allocate executions so the average price in each account is exactly the same. This will however leave some executions or sub-executions unallocated for manual allocation
- Near Average allocation algorithm will allocate all executions so that the average prices in each account has a minimal distance to the average of all average prices.

The software tool implementing the method according the invention supports a certain number of native API connectivity for exchange gateway and market data feedhandler. Each gateway / feedhandler is unique but utilizes the same underlying C++ gateway / FH mechanism, which ensure that we can maintain as many as possible gateways as well as reducing the time to develop a new gateway.

The connectivity covers the 4 main asset classes, i.e. equities, F&O, Fixed income and FX.

The GTW (gateway) is coupled with a Execution Service which provides the software-based load-balancing on the gateways, as well as intelligence for the order handling.

The software tool implementing the method according to the invention supports ISVs supported connectivity, such as GL (SLE, SLC) and Fidessa, as well as market data feeds such as Reuters, and Bloomberg.

Resilience is obtained through:

- Persistence of all trading entities in database,
- Usage of Tibco/RendezVous Certified Messaging.

It guarantees that after a hardware/network disruption, services that are restarted on another hardware node recover unprocessed messages of the failed component that is no longer servicing.

It is vital to be certain not to lose any replies from the different venues. By configuration, this behavior can be turned off when submitting requests to external applications. For instance, algorithms that start after a potentially long interruption of service are better off discarding order instructions issued before the interruption. Market conditions may actually have changed drastically in the mean time.

Resilience relies on the start-up duration of the different components, which is optimized. Recovery of components needs not be finished before they start processing requests. Resilience of the system is based on Tib/RVCM (Tibco RendezVous Certified Messaging) message delivery. It guarantees that messages are not lost

Critical activities, such as DMA (Direct Market Access) trading, algorithmic trading and advanced execution services require making hardware and networking outages transparent to the users and to other external systems the software tool according to the invention is integrated with.

Peripheral services (support/technical/care trading services) can be deployed on hardware clusters and restarted by scripts on the node taking over in case of service interruption.

The Advanced Execution Platform uses hot-standby fault-tolerant paradigm. The secondary server is purely passive, and does not even listen to incoming requests or replies from the market. It merely updates all caches when notified so by the primary server. Smart Order Routing, which is one of these advanced services, is illustrated hereafter, with reference to Figure 3.

In case of the loss of the primary server, after the short (a few seconds) fail-over duration, the backup server saves recovery time. It is immediately ready to function.

The following services benefit from load-balancing, and the load can be shared amongst several instances of these services running on separate hardware nodes.

Determination of the destination service instance can be achieved through database configuration if requests are issued by users. Users are simply assigned an instance for trading lifetime.

The software deployment may achieve both fault-tolerance and load-balancing with only a pair of machines, with reference to Figure 4. Load is shared by two primary instances of Machine A hosts one active instance, while its backup server is running on machine B. At the same time, another active instance is running on machine B, with its secondary instance running on machine A.

This architecture can be extended to N pairs of fault-tolerant hardware machines, where the load is divided amongst N active processes.

So, whenever an application will have to execute a query or a stored procedure, it will send a specific message to this service that will execute the given SQL command, collect the results and send them back to the originator of the request through Tibco middleware. This way, should the databases supported be extended, services will remain unchanged and only the persistence service will have to be upgraded.

The access points are:

- Rich Front end (.NET 2.0), all the strength of the 2.0 security policies are utilized.
- Light web front end: Data passed between the client interfaces and the platform according to the invention uses the Secured Sockets Layer (SSL) protocol to encrypt data over the Internet. SSL is a standard protocol between the browser and the web server.

On the middleware layer, RV 7.X security solution is used. This allows that the messages can not be seen and altered.

The performance is expressed as two constrains: Latency and Throughput.

Software performance is often described as the total effectiveness, including throughput, individual response time or latency and availability under heavy load. The performance is dependent on the overall client architecture, and of the complexity of order validation and risk management.

The objective is then to be able to provide different client deployment, which is on side of the spectrum low latency and on the other side high latency but as functionality rich for multi-location deployments.

For pure trading with minimum validation and no or little risk management the benchmark is the following:

- Low Latency: below 5 ms for Smart order routing / Algorithmic trading / DMA solutions.
- Mid Latency: Latency of average 50 ms and up to 100 ms from the front end to the exchange / venue for 'human trading'.
- For complex validation and risk management (cash, collateral, SPAN...), it can go up to 200 ms.

All components parallelize processing and minimize time-consuming operations. This is achieved via a combination of load-balancing (multiple component instances), multi-threading, efficient component design and caching of accessed data.

The different benchmark on throughput take a certain number of messages or orders expressed by CPU. The below demonstrates a benchmark is a Stress test for Advanced Smart Order Routing, with reference to Figure 7:

The architecture implemented in the AEP follows a component based approach which brings modular design, increases programming language independence, maintenance and reliability and facilitates flexibility in shared developments and resources assignments.

Only trading related components are described in this section.

The Authentication Service (AS) component is responsible for the Authentication service and the Licensing service.

The Order Reference Service (ORS) component is the main access from the front-end perspective. It is responsible for Order Reference Service, Basket and order list Reference Service, Validation Service, Permission Service, Incoming Routing Service and Custom validation services

The Position Keeping Service (PKS) component is responsible for the Validation Service against positions: Position Management Service and Post-trade allocation Service

The Routing Service (RS) component is responsible for the Outgoing routing service.

The Care Service (CS) component is responsible for the Care Service and the Permission Service.

The Execution Service (ES) component is responsible for the exchange related part of Order reference Service and Gateway connectivity.

The Synthetic Algorithmic Trading Server (SATS) component is responsible for the Algorithmic service, the Waving Service, Best Execution service, Smart routing and Synthetic service.

The Quote Service (QS) component is responsible for quoting / auto-quoting service for IOI, and for quoting / auto-quoting for RFQ-driven (B2C) trading.

The Price Contribution Service (PCS) component is responsible for the Service to federate prices coming from different sources (MS Excel spreadsheet...).

The Transaction Service Manager (TSM) component is responsible for the Persistence Service.

All functional services are fulfilled by libraries. Only the interface to the outside world is externalized. Thanks to this architecture, services can be merged together to form a unique component, which boosts performance, simplifies deployment and administration.

That means that for one low-latency deployment version, the different technical components will be merged into one unique component with inter-application object brokerage.

The smart order routing server typically merges the following services:

- Synthetic Algorithmic Trading Service
- Order Reference Service
- Routing Service
- Execution Service

If the Smart Order Routing Service needs to communicate with many venues and Execution Services, it is a simple matter of plugging/unplugging the different services together. Simplicity of deployment, administration and speed remain strong requirements.

In order to empower its Client to roll-out new services on the AEP Platform the following interfaces/capabilities have been put in place:

- Message Interface Protocol (MIP): internal messaging between service is fully published and available in a MIPimate format in order to allow our clients to create new services that will complementing the existing AEP services
- JavaScript Extensibility: Some of the behaviour of the existing services can be adapted/customized through JavaScript extensibility. For example this allows certain orders to be put in a Held Status (Waiting for review by a adapted personnel) based on certain criteria,
- C++ API: New Applications Modules that leverage the full AEP Platform are developed thanks to AEP C++ API. This API is not only suited for customer use but is additionally the API used by Financial to develop its own core product algorithms.

Components described in the previous section articulate around a trading bus.

The software architecture handles any complexity of parent/child order structure in a similar way for all backend components. To achieve that, the considers complex trading strategies as a single synthetic instrument, whose venue is internal to the product according to the invention. This instrument can be as complex as needed.

Order is the central entity in the trading activity. From the trading users (Sales/Dealers/Traders) perspective, trading is always done via the order entry ticket. An order has its intrinsic functional characteristics, plus possibly:

- an execution policy
- child orders
- a set of algorithms
- a set of benchmarks to compare executions against

The execution policy describes the way to execute the order. It can be a real venue (DMA), a desk of dealers (Careful), or a synthetic execution venue (algorithm). The algorithm is related to the way to trigger or execute the order, like when simulating a stop order not supported by the venue, or when requesting to outperform a VWAP.

Child orders are inherent to the way the software tool considers execution policy. As long as the execution policy is not DMA, an order is created inside the system, and this order will trigger child orders when the execution policy tells it. This policy can be:

- manual in the case of Careful discretion, when the dealer decides to take care of the order
- automatic in the case au Algorithmic execution. This comprises synthetic order types, waving, custom algorithms...

Care and algorithmic orders may have child orders.

Benchmarks constitute a set of data that will help assess the efficiency of the executions of the order. They can be calculated from historical data, or a VWAP instruction over a time horizon, or be as simple as an arrival price.

The algorithms consist of events to listen, and actions to take when events match a given pattern. Events can be market data (before triggering a synthetic stop order for instance), or the status of an order (before releasing a waved order).

The software implementing the method according to the invention represents basket trading inside as lists of orders. Order lists mix any type of orders (in execution policy, side, instrument...) and impose no particular execution constraints. Although baskets often represent indices and are constituted by a large selection of orders on equities, individual orders are free to be executed at their own pace, or to be rejected.

In order to present complex value added services such as synthetic strategy trading, or smart routing to the end user the same way trading on listed instruments is represented, the software implementing the method according to the invention always considers order entry on a single instrument. This instrument may be as complex as needed, and may have no physical venue. This complexity can be combined with the parent/child order structure exposed in the previous section.

Whatever the level of order structure we consider, the order is on a simple instrument, which can differ from the instrument of its parent and/or child orders. Typically, a synthetic strategy order is on a multi-leg instrument, and its child orders will be on the individual instruments that make up the legs

The software implementing the method according to the invention defines simple instruments as all listed instruments, whether they are equities, derivatives, or market strategies. The same way, calls structured instrument an instrument not natively traded on a single venue, whether it is multi-listed and requires smart-routing. It represents all structured instruments in a main instrument/instrument legs structure.

For reusability purposes, synthetic strategies are persisted. They are similar to strategies listed on markets, except that the weights of the different legs can be revised over time. Likewise, multi-listed instrument are represented as a parent instrument with child instrument really traded on venues.

Execution constraints govern the way the different legs of a structured instrument will be executed on their respective venues. For a basket and a multi-listed instrument, legs can be freely executed. For synthetic strategies, executions must arrive simultaneously and according to the different weights.

When trading on a structured instrument, an execution algorithm can be attached to the order to specify the way the order must be routed: for instance, select the cheapest venue whatever the quantity, or buy the exact specified quantity on any number of venues, at the best average price.

An order is always on a single instrument, and one or many venues this instrument is listed on may be specified.

A careful discretion order instructs to outperform the VWAP of an index over a time window via a given algorithm. Since the index is not directly traded on the venue, a basket of orders will simulate this behavior.

The sales person enters a careful discretion order list instructing those instructions, possibly specifying the algorithm name to use to outperform the VWAP. He or she then assigns it to a dealer. Upon acknowledgement, the dealer enters an algorithmic order list linked to the client order, attaching the specified algorithm. When the algorithm triggers, it releases individual DMA orders.

Likewise, an order can instruct to slice a big order into smaller waves. Other instructions impose hedging, e.g. selling a call on an underlying, while simultaneously buying the underlying. Since both the option and the underlying are listed on several venues, instruction is given to buy at cheapest and sell at most favorable prices, whatever the venues.

An initial order is entered instructing to trade on the synthetic hedging strategy. The legs of this synthetic strategy are themselves multi-listed, thus execution constraints are attached to the instrument as an execution algorithm.

Moreover, waving instructions are attached as algorithms to this order, whose execution policy is algorithmic. When a wave instructs to slice the order, a smaller DMA order on the same synthetic strategy is released. Since the instrument is structured, and execution constraints are attached to it, the attached algorithms are executed. Eventually, they may trigger child orders on the listed legs.

Those examples illustrate how easy it is to combine complex trading strategies inside the software tool, and manipulate them in a common manner.

This is a non exhaustive list of supported hardware for the software tool implementing the method according to the invention:

| Vendor | CPU Architecture | Processor Type | Operating System |
|--------|-----------------|----------------|------------------|
| Intel | i386 | i686 | Red Hat Enterprise Linux ES v3 or higher<br>Red Hat Enterprise Linux AS v3 or higher |
| Sun | sun4u | sparc | Sun Solaris 2.8 |

Depending on the platform and the compiler efficiency, binaries release will result from the use of either GNU gcc/g++ or native compiler like Sun Forte for Solaris, in 32 bits mode (no 64 bits for the moment) and either with debug or optimizations options for C++ components and Sun JDK 6.0 for Java components.

This is a non exhaustive list of required third party software for running the software components:

- Java virtual machine Sun JRE 6.x,

- Tibco Rendezvous middleware 7.x,
- Oracle database 10g.
- Market Data infrastructure or alternatively Reuters Market Data Systems (RMDS).
- Margin information provider for Futures and options MarginClick.

In this configuration, a complete product is deployed on a single site which may be composed of one or multiple instances of the servers, interconnected on a local network. This supposes that Tibco RV middleware will be deployed on all machines and components will be dispatched on available servers depending on the server processors number and power. Then, at least one instance of Oracle or MySQL server has to be deployed for persistence and recovery of data.

In this type of configuration, multiple BE sites are deployed and interconnected to each others. This supposes that local site networks are reachable from the others and that Tibco rvrd daemon has been deployed and configured accordingly.

For deployment costs and performance purposes, gateways are located at closest to the venues. If there is no trading activity on that location, it is worth installing only the gateway there to reduce maintenance and IT costs. The gateway will communicate with its dedicated ES via a pair of Tib/Rvrd daemons.

Then, RS components have to be configured to be able to route messages to others sites when needed (E.g. RS may route order messages to another site for reaching a remote market access, for order book rolling...) thanks to rvrd processes. Each deployment runs its own BE server components. Database can be shared in a single location, or duplicated on every site.

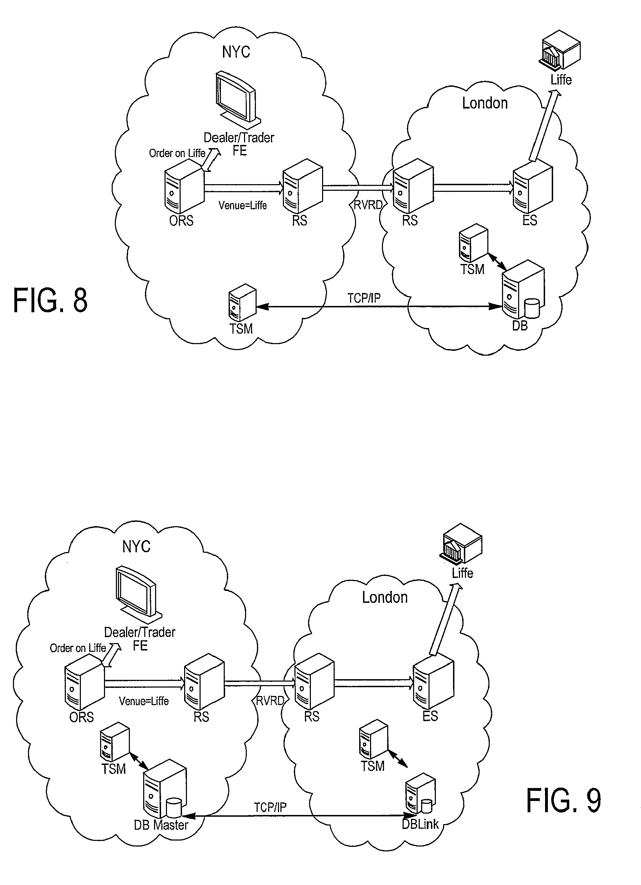

Multi-site deployment can involve a single database where data are centralized, with reference to Figure 8. The different TSM servers on the different sites are directly connected to the centralized database server via TCP/IP. This represents the easiest deployment.

To offload the unique database server, an intermediate solution proposes to deploy a database server on every site, with reference to Figure 9, but data are still shared on a unique site. Every database server accesses the data through a DBLink. The servers can also host the stored procedures to improve performance.

In the deployment with a duplicated database, data are replicated in real-time on the different site. This functionality relies on Oracle provided by Oracle Replication protocol, and this deployment is not proposed by MySQL. Data are replicated, either synchronously, or asynchronously to improve performance on all locations.

Many markets offer a co-location service, which includes rental of server racks in the market premises, broadband networks to the main markets, remote administration and monitoring access

The main benefit is to reduce latency to access the market order book, which particularly matters in the Smart Order Routing context.

The Advanced Execution platform can be deployed in co-location, adding the benefit of deployment and maintenance cost reductions by sharing hardware, database and third party licenses, market data infrastructure, market connectivity when possible, and minimizing IT staff required to administrate and monitor the platform.

The presented services are mainly linked to functional requirements, nevertheless the product is also constrained by technical requirements (driven by the market or induced by the functional requirements themselves). Thus, a collection of static or dynamic libraries (for C++) and JAR libraries (for Java) will be developed in order to implement those technical required features.

The combination of technical libraries and modules (implementation of functional services) will then produced the BE servers. Server functional features will be built on top of the following Java and C++ libraries implementing technical features.

In order to facilitate the components design understanding and maintenance, Java and C++ libraries will tend to keep their interfaces (and eventually Third Party Software) and mechanisms similar.

Of course, the scope of the invention should be determined not by the given examples, but by the appended claims and their legal equivalent.

**Table of acronyms**

| | |
|---|---|
| AEP | Advanced Execution Platform |
| AS | Authentication Service |
| SATS | Synthetic Algorithmic Trading Service |
| CEP | Complex Event Processing |
| CS | Care Service |
| DMA | Direct Market Access |
| GTW | Gateway |

MIP        Message Interface Protocol
ORS        Order Reference Service
PCS        Price Contribution Service
PKS        Position Keeping Service
QS         Quoting Service
RS         Routing Service
RBDMS      Risk Based Data Management System
TSM        Transaction Service Manager
VWAP       Volume Weighted Average Price

**Claims**

1. Method for assisting an operator in an acquisition decision process, said decision process being related to the acquisition of a predetermined total amount (K) of entities among a plurality of P pools of entities, each pool being associated with a cost function (f1,f2,...,fp) supplying a cost value depending on the quantity (x) of acquired entities within said pool,
   **characterized in that** it comprises:

   - calculating an order book including costs, so as to obtain a list of couples (price, quantity) for each pool,
   - building, within a dynamic programming algorithm, a graph comprising a (0,0) top and P.(K+1) tops each corresponding to a couple (p,k) for a pool (p) among said plurality of P pools and a quantity (k) less than said total amount K,
   - determining a shortest path between said top (0,0) and top (P,K),

   deriving from said shortest path, for each pool (p) of entities, the corresponding optimal quantity ($k_{opt}$) to be acquired, and

   providing said operator with said optimal quantities (k) respectively corresponding to each pool among said plurality (P) of pools.

2. The method of Claim 1, wherein the graph is built with vertices corresponding to quantities (q) to be acquired in each pool (p), and with edges corresponding to the costs induced by acquiring quantities (q) on said pool (p).

3. The method of Claims 1 or 2, wherein the cost functions are approximated by convex functions.

4. The method according to any of preceding Claims, wherein a best volume of entities for a predetermined limit price is searched.

5. The method according to any of preceding Claims, wherein a best price for a predetermined volume of entities is searched.

6. The method according to any of preceding Claims, **characterized in that** if further comprises the step of supplying an information on a predictable number of executions to be achieved in the dynamic programming algorithm for a volume of entities to be acquired.

7. The method according to any of preceding claims, wherein entities comprises liquidities available for acquisition in a trading market.

8. The method according to Claim 7, **characterized in that** it is implemented within an Advanced Execution Platform (AEP).

9. A system for assisting an operator in an acquisition decision process, said decision process being related to the acquisition of a predetermined total amount (K) of entities among a plurality of P pools of entities, each pool being associated with a cost function (f1,f2,...,fp) supplying a cost value depending on the quantity (x) of acquired entities within said pool, said system implementing the method according to any of preceding claims,
   **characterized in that** it comprises:

   - means for calculating an order book including costs, so as to obtain a list of couples (price, quantity) for each pool,

- means for building, within a dynamic programming algorithm, a graph comprising a (0,0) top and P.(K+1) tops each corresponding to a couple (p,k) for a pool (p) among said plurality of P pools and a quantity (k) less than said total amount K,
- means for determining a shortest path between said top (0,0) and top (P,K),
- means for deriving from said shortest path, for each pool (p) of entities, the corresponding optimal quantity ($k_{opt}$) to be acquired, and
- means for providing said operator with said optimal quantities (k) respectively corresponding to each pool among said plurality (P) of pools.

**10.** The system of Claim 9, wherein entities comprises liquidities available for acquisition in a trading market.

**11.** The system according to Claim 10, **characterized in that** it is deployed within an Advanced Execution Platform (AEP).

CROSS-ASSET
TRADING

FX ALGOS FIXED INCOME
(ALGOS)

ASOR

| Rich F.E. | | WEB SERVICES - BUS | application modules | | BUS | PRODUCTION |

trading-specific CEP

order & quote MGT

Smart F.E.

connectivity

middle ware

Admin F.E.

technical

AUDIT

HISTORICAL

DWH

| PRESENTATION | IN-MEMORY PROCESSING | DATA BASE |

# FIG. 1

Events:Parent
order

Action:Orders
(Child, arbitrage,...)

Scenario (Algorithm) in C++

Interface-
Market
data,
Order,
Events, ...

Events:Market
data

CEP Grammar

Automatons

Complex Event Processing
(CEP) Engine-C++

Events:News, ...

Action:Alerts, ...

# FIG. 2

Quod SOR components

Quod Front-End

RV

SOR+ORS
(Active-Active)

SOR+ORS
(Active-Active)

Market
Connection

Native TCP Protocol
or FIX

EMS/FIX gateway

JDBC

JDBC

MDS/RDS
(MarketReferenceData)

Oracle

# FIG. 1A

# FIG. 3

Buy "at best" order

SOR Gateway

SOR Manager

Mkt1

Mkt2

Electronic Market System

**Market**

# FIG. 1B

FIG. 4

FIG. 5

Latency(Time)

FIG. 6

FIG. 7

EP 2 166 494 A1

FIG. 8

FIG. 9

18

Europäisches
Patentamt

European
Patent Office

Office européen
des brevets

**EUROPEAN SEARCH REPORT**

Application Number

EP 08 30 5532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Advanced Execution Platform and Smart order routing use case" QUOD FINANCIAL WHITE PAPER, [Online] April 2008 (2008-04), - April 2008 (2008-04) XP002512631 Retrieved from the Internet: URL:www.quodfinancial.com> [retrieved on 2009-01-29] * the whole document * ----- | 1-11 | INV. G06Q10/00 G06Q40/00 |
| X | "Adaptive Event-Driven Trading in the Foreign Exchange Markets" QUOD FINANCIAL WHITE PAPER, [Online] June 2008 (2008-06), - June 2008 (2008-06) XP002512632 Retrieved from the Internet: URL:www.quodfinancial.com> [retrieved on 2009-01-29] * the whole document * ----- | 1-11 | |
| X | US 2001/032163 A1 (FERTIK MICHAEL [US] ET AL) 18 October 2001 (2001-10-18) * abstract; figures * * paragraph [0066] * ----- | 1-11 | TECHNICAL FIELDS SEARCHED (IPC) G06Q |
| X | US 2007/005551 A1 (WINKLER DAVID V [US]) 4 January 2007 (2007-01-04) * abstract * * paragraphs [0009], [0052] * ----- | 1-11 | |
| X | US 7 386 500 B1 (PAYNE RICHARD C [CA]) 10 June 2008 (2008-06-10) * column 2, lines 35-45 * * column 8, lines 7-47 * ----- | 1-11 | |

| The present search report has been drawn up for all claims | | |
|---|---|---|
| Place of search | Date of completion of the search | Examiner |
| Munich | 29 January 2009 | Aguilar, José María |

EPO FORM 1503 03.82 (P04C01)

## ANNEX TO THE EUROPEAN SEARCH REPORT
## ON EUROPEAN PATENT APPLICATION NO.

EP 08 30 5532

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2009

| Patent document cited in search report | | Publication date | Patent family member(s) | Publication date |
|---|---|---|---|---|
| US 2001032163 | A1 | 18-10-2001 | NONE | |
| US 2007005551 | A1 | 04-01-2007 | NONE | |
| US 7386500 | B1 | 10-06-2008 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0229608 A2

- US 20080010181 A1